# EUROPEAN PATENT SPECIFICATION

(11) **EP 0 258 471 B1**
(45) Date of publication and mention of the grant of the patent: **24.03.1993**
(21) Application number: 86112071.5
(22) Date of filing: 01.09.1986
(51) Int. Cl.: G05B 19/18

(54) **Method and device to measure motion errors of NC machine tools**
Verfahren und Gerät zum Messen der Antriebsfehler von Werkzeugmaschinen
Méthode et dispositif pour mesurer des erreurs d'entraînement de machines-outils

(43) Date of publication of application: 09.03.1988
(73) Proprietor: Kakino, Yoshiaki, Dr., Sakyo-ku Kyoto-shi Kyoto 606 (JP)
(72) Inventor: Kakino, Yoshiaki, Dr., Sakyo-ku Kyoto-shi, Kyoto 606 (JP); Ihara, Yukitoshi, Higashiyama ku,Kyoto-city (JP); Kamei, Aketoshi, Mitaka-shi, Tokyo 181 (JP)
(74) Representative: Weickmann, Heinrich, Dipl.-Ing.

(56) References cited:
- GB-A- 2 006 481
- US-A- 4 435 905
- WESTERN ELECTRIC, Technical Digest, no. 20, October 1970, pages 59,60, Princeton, US; W.E. RAPP: "A method for determining response characteristics of a numerically controlled machine"
- Essays for 1985 Scien.Lecture JP Society, 29.03.1985, Kakino et al.
- JSPE-52-07, 86-01-1193 (7.86)
- Simple method for testing meas. machines - J.B. Bryan, Prec. Eng. vol. 4. Nr. 2, page. 61 to 69

## Description

The invention relates to means for measuring motion errors of NC machine tools, using an axially telescopic bar which is coupled to rotary joints at both its ends and which comprises a built-in scale to measure its telescopic movements, wherein one rotary joint is mounted on a spindle of the NC machine tool, and one rotary joint is mounted on a table, wherein the NC machine tool is numerically controlled so that the one rotary joint takes a circular interpolation motion relative to the center of the other rotary joint, and wherein the telescopic movements of the telescopic bar are memorized and recorded to evaluate and analyse motion errors, and the pattern and the amount of deviation in relation to a datum circle are checked.

The "Essays for 1985, Spring Scientific Lecture Meeting of Japan Society of Precision Engineering", 29th March, 1985, by Y. Kakino, T. Ihara, M. Nawada, A. Kamei, describe means to measure motion errors of NC machine tools, using an axially telescopic bar having extensions between which a telescopic mechanism is placed, which bar is coupled to rotary joints at both ends thereof, and which includes a built-in scale to measure its telescopic movement, wherein one rotary joint is mounted on a spindle of the NC machine tool and one rotary joint is mounted on a table, wherein the NC machine tool is numerically controlled so that the center of the one rotary joint takes a circular interpolation motion relative to the center of the other rotary joint, and wherein the telescopic movement of the telescopic bar is memorized during said motion and recorded to evaluate and analyse motion errors, checking the pattern and the amount of deviation in relation to a datum circle motion.

A sampling of the values of telescopic movements can be executed periodically at a given rotational angle increment or time interval.

A moiré fringe scale is built in the telescopic mechanism which produces signals proportional to an applied differential discplacement; those signals are subsequently carried to other electronic equipment for further treatment / display / evaluation.

The paper "A simple method for testing measuring machines and machine tools", by J.B. Bryan, Precision Engineering, April 1982, vol. 4, No. 2, pp. 61-69, discloses a Telescopic Magnetic Ball Bar which is equipped with extension bars of different lengths detachable from a main telescopic mechanism.

US-A-4.435.905 discloses the use of detachable extension rods of various lengths which in conjunction with a main telescopic mechanism form a telescopic means.

A conventional method to measure motion errors of NC machine tools requires to actually machine a plate on the machine tool with a circular interpolation program, and the out-of-roundness errors of the machined plate is measured with an available means such as the out-of-roundness measuring machine as specified in JIS-B6336. This method requires two separate operations, machining and measuring, and takes a lot of time. Besides, the data obtained by this method are not accurate enough for analyzing the test results to define the origins of the errors of the machine tool because the sensitivity of the method is affected by the diameter of the cutting tool to machine a plate, as well as by the ability of an out-of-roundness measuring machine which is able to make quick responses so that fine movements of actual motions can be precisely detected. In addition to that, the measuring range of this method is restricted by the measuring range of the out-of-roundness measuring machine itself. The maximum diameter of a circular plate to be machined is about 400 mm even for a big machine tool having a wide working area, since the capacity of out-of-roundness measuring machines now available is about 400 mm in diameter.

Covering up such defects, this invention provides means to measure motion errors of NC machine tools and define the origins of the detected errors by which NC machine tools can be assembled and adjusted in a shorter period of time and by which the costs of developing a new machine tool are lowered, since geometric errors can be found more easily than before, and modifications can be made at an earlier stage in developing new machines.

These means are characterized in that the origins of said errors are defined referring to the recorded telescopic movements to prepared trace patterns of typical origins of errors, that said telescopic movements are sampled periodically at intervals of a certain period of time, that a built-in transducer detects said sampled telescopic movements and sends signals to a device to memorize said signals and to plot them on the polar coordinates in the form of a curve, and that means detect how the curve deviates from the datum circle to extract distinctive characteristics from the curve comparing them with data of typical origins for motion errors contained in a data bank and to define and display the origins for the motion errors.

### Brief description of the accompanying drawings.

- Fig.1 :: Measuring mechanism embodying the invention.
- Fig.2 :: Descriptions of data processing members.
- Fig.3 :: Flow chart showing data handling process.
- Fig.4 - 7 :: Typical patterns of various error origins.
- Fig.8 - 10 :: Actual motion error traces obtained by means embodying this invention.
- Fig.11 :: Description of a substitutional rotary joint.

### Detailed description of a preferred embodiment :

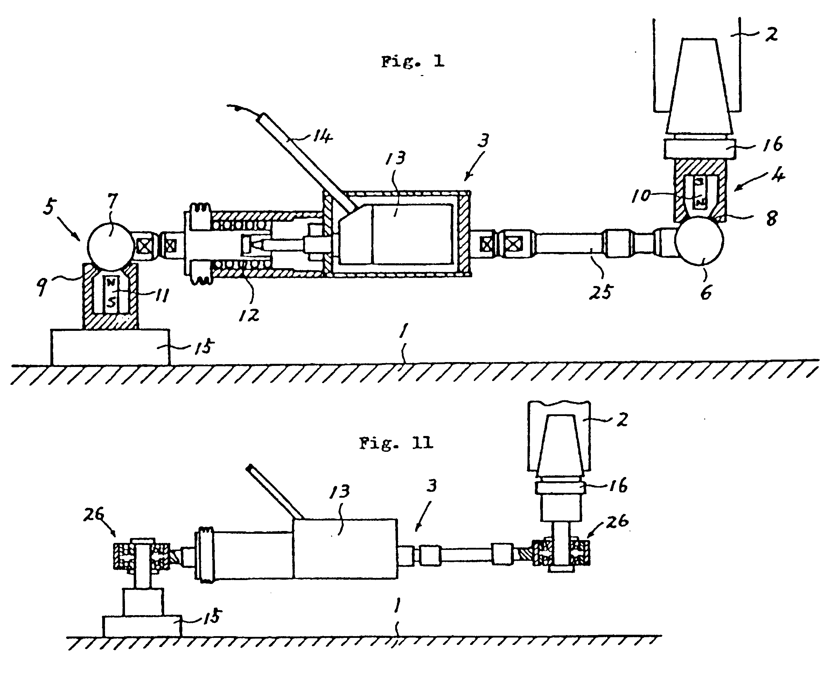

Fig.1 shows measuring members of the measuring device embodying the invention. Steel balls (6) and (7) are mounted on the both ends of a bar (3) which has an axial telescopic mechanism (12) in it. The steel ball (6) constitutes a rotary joint (4) coupled with a spherical socket (8) and a permanent magnet (10) in the spherical socket (8). The magnetic circuit of the permanent magnet (10) forms a closed loop through the spherical socket (8) and the steel ball (6). And, the steel ball (6) is rotatablly maintained in the spherical socket (8) when an appropriate gap is left between the permanent magnet (10) and the steel ball (6). The other steel ball (7) also constitutes a rotary joint (5). The telescopic mechanism (12) is so adjusted to allow the said bar to expand or contract in axial direction only, leaving the smallest possible play in lateral direction. The axial telescopic movement is detected by a displacement detector (13), which sends the signal through an output cable (14) to data processing members. One of well-known devices, such as the moiré scale and the differencial transducer is employed as said displacement detector.

Hereunder, an example of measuring procedures is described taking the case of motion error measurements of XY axis table of a vertical type NO milling machine. The rotary joint (4) is mounted on the machine spindle (2) utilizing a chuck (16). The other rotary joint (5) is mounted on the machine table (1) utilizing a fixture (15) at the same level as the rotary joint (4) appart from the steel ball (6) by Rₒ which represents a normal distance between centers of the steel balls (5) and (6), leaving adequate allowance for the two-way axial movements of the telescopic mechanism. Then, the machine is run by a pre-set program so that the XY table will take a circular interpolation motion around the center of the steel ball (6) with the radius of Rₒ. The machine spindle is not rotated at that time.

If both the motion error of the machine table and the interpolation error of the NO is zero, the bar (3) will rotate around the steel ball (6) with the radius of Rₒ. If and when the motion of the XY table is not accurate, it is not able to make correct circular motion, and the value of Rₒ changes by ΔR. The displacement ΔR is detected by the displacement detector (13), and the signal is sent to the data processing members through the output cable (14), where the signal is analyzed.

The hardware of said data processing members is shown in Fig.2. A series of tests have been carried out employing a moiré scale as the detector (13), and the detected signals are digitized and are sent to a microcomputer (19) through an interface unit (18). The obtained data are processed chiefly by said microcomputer (19) which is accompanied by a CRT display (20), a floppy disc memory (21), a key board (22) and a XY plotter (23).

Fig.3 shows a flow chart of data handling process. The signals sent from the detector (13) are digitized by an up-down counter (17). At that time, the normal distance between the two steel balls, Rₒ, shown at the begining of the test is deleted, and only displacements from Rₒ are counted. The interface (18) is so adjusted that the output signals from the counter (17) are sent to the computer intermittently with a certain degree of rotational angle, every 0.1 degree for example. Though accurate signals of the rotational angle would be taken from the controller of the machine tool, it requires troublesome procedures to do so. On the other hand, NO machine tools on the market employ precise equiangular speed motion to take circular interpolation motion. And, in case of a sampling rate of 0.1 degree or so, it is practically accurate enough to make sampling at intervals of a certain period of time corresponding to the rotational angle. The rond data are stored in the data memory (19) and are transferred into the polar coordinate system to make polar plots. The transferred data are shown on the CRT display (20) right away. All data obtained by one full turn of test are stored in the memory, and the deviations and errors in proportion to the datum circle are displayed. Such tests are carried out in one each clockwise and counter-clockwise turn to obtain bi-directional polar plots, and the motion errors of the machine tool are evaluated in total in regard to the below-mentioned items in each XY, YZ and ZX plane :
1. Out-of-roundness errors in clockwise and counter-clockwise circular motions.
2. Uni-directional repeatability errors.
3. Bi-directional repeatability errors.
4. Higher harmonic components.

After such total evaluation, characteristics of the measured errors are extracted, taking the following items into consideration :
1. Whether the trace is symmetrical about orthogonal axes.
2. Inclination of the axes.
3. Ellipticity.
4. Height difference and irregularity.
5. Influence of the rotational direction.

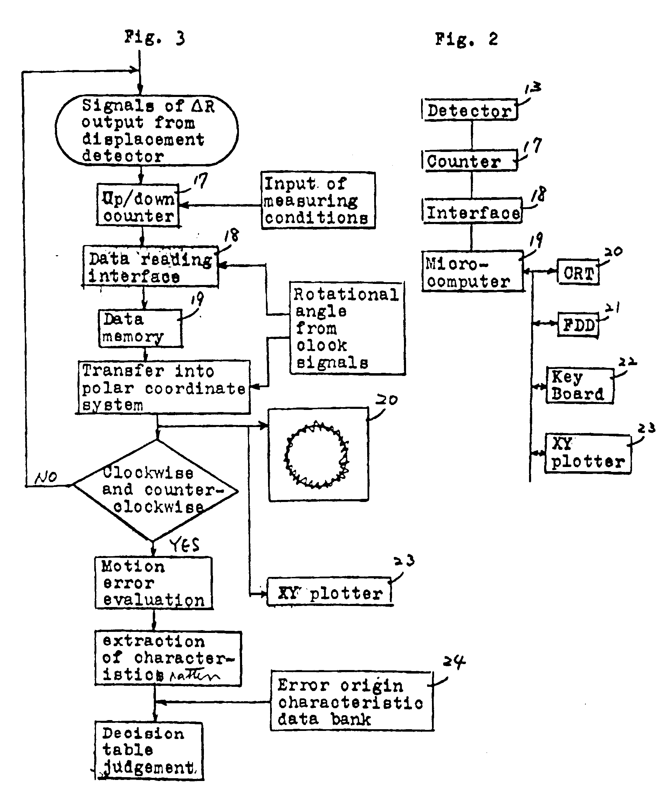

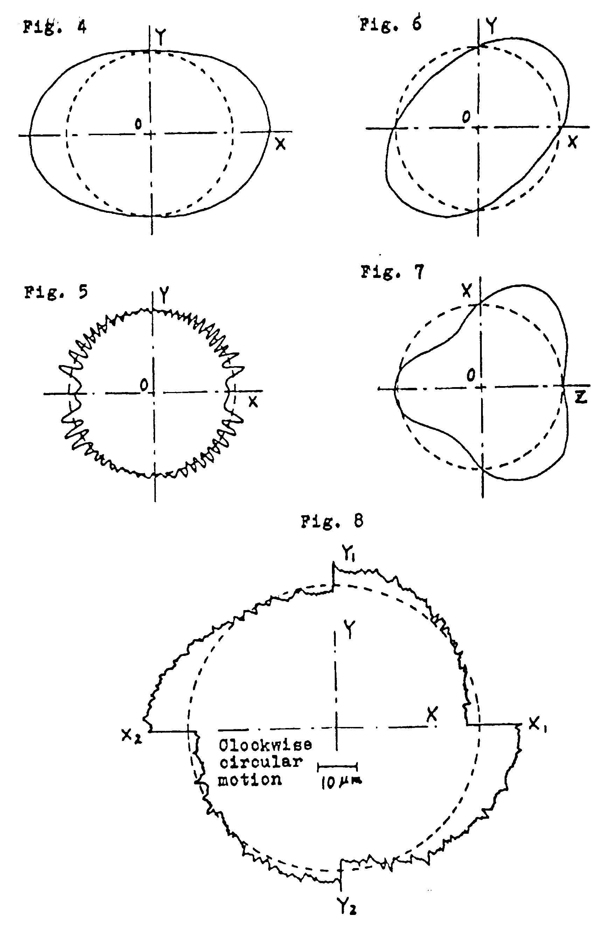

Typical patterns of traces are shown in Fig.4, 5, 6 and 7. These typical characteristic patterns of error origins are stored in the data bank (24). Fig.4 represents the characteristic pattern for the extended X axis scale, Fig.5 for periodical errors of the feed mechanism of X axis, Fig.6 for squareness error between X and Y axes, Fig.7 for the X axis guide way warped up in Z axis direction at its both ends.

Referring the characteristics of the obtained circular trace to such data, the origins of motion errors of the measured machine tool are defined. The following are typical error origins of NO machine tool :

### Geometric error :

1. Straightness error of guide way.
2. Squareness error between two axes.
3. Angular motion of the slider.

### Potential error of feed mechanism :

4. Uniform error of the positioning scale.
5. Back-rush of feed drive mechanism.
6. Pitch error of the ball screw.
7. Indexing error of the positioning scale.

### Kinetic error of feed mechanism :

8. Positioning error caused by overrun.
9. Stick motion and stick slip.
10. Error caused by vibration.
11. Lost motion.
12. Mismatching of position loop gain.

In most of actual cases, these error origins are found mixed instead of individually. And, the circular traces obtained by means of this invention also usually show mixed characteristics of several error origins.

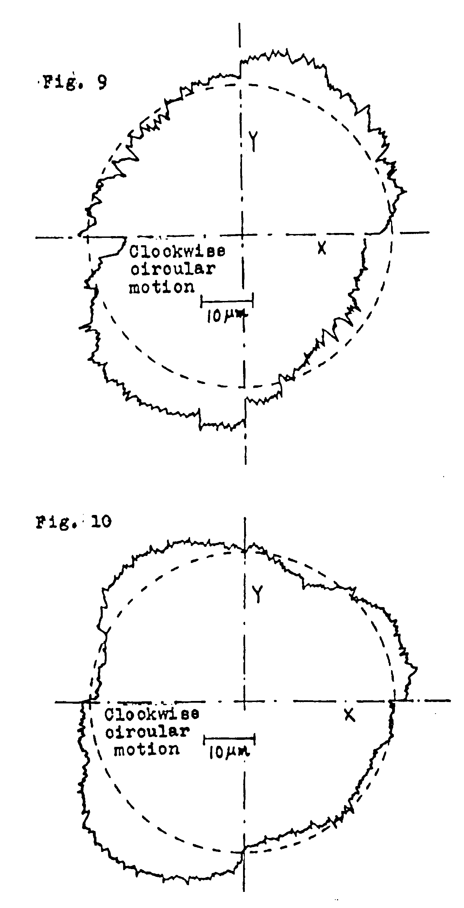

The following are descriptions of traces obtained by actual measurements. In Fig.8, the value of ΔR suddenly changes at each point of X₁, X₂, Y₁, and Y₂. At such points, the direction of the movement of the XY table is reversed. The errors are apparently originated from lost motion caused by the table drive mechanism of the machine. The trace of Fig.9 is deviated elliptically, and is inclined against two axes, which suggests the squareness error between X and Y axes. After the error components of the lost motion and the higher harmonic vibration are eliminated, the ellipticity of the trace is 8µm. And, the squareness error between two axes is 8µm per 200mm since the length Rₒ of the bar employed in said test was 200mm.

Fig.10 shows that Y axis has the straightness error in X axis direction.

In the aforementioned examples, tests have been carried out mainly in XY plane fixing the Z axis. In actual measurements, however, circular motion errors are measured in ZX plane fixing Y axis, and in YZ plane fixing X axis also, and three dimensional motion errors are diagnosed utilizing such data obtained from different planes, to define the error origins.

The length Rₒ of the bar can be adjusted as required, by changing the extension (25) of Fig.1. And, the whole working area of the large NC machine tool can be measured as accurately as the small machine tool. This method is applicable to the horizontal type machine tool also. In the aforementioned test examples, the rotary joints rotatable in any direction were used. However, the purpose of this invention can be accomplished by employing rotary bearings at the both ends of the bar (3) instead of said joints as shown in Fig.11-(26).

### Effects of the invention :

As described with samples in the above, motion errors of NC machine tools can be diagnosed accurately, conveniently and in a short period of time, extracting characteristic patterns from motion error traces obtained by means embodying this invention, with calculating process, if necessary. In addition, the error origins are indicated with figures. The method of the invention is superior to the prior art in this point, too. The invention will bring about not only rationalization of adjustment and inspection in manufacturing NC machine tools, but also improvement in accuracy of newly produced machine tools.

## Claims

1. Means for measuring motion errors of NC machine tools, using an axially telescopic bar (3) which is coupled to rotary joints (4, 5; 26) at both its ends and which comprises a built-in scale (13) to measure its telescopic movements (ΔR), wherein one rotary joint (4; 26) is mounted on a spindle (2) of the NC machine tool, and the other rotary joint (5; 26) is mounted on a table (1), wherein the NC machine tool is numerically controlled so that the one rotary joint (4; 26, and 5; 26 respectively) takes a circular interpolation motion relative to the center of the other rotary joint (5; 26, and 4; 26, respectively), and wherein the telescopic movements (ΔR) of the telescopic bar (3) are memorized and recorded to evaluate and analyse motion errors, and the pattern and the amount of deviation in relation to a datum circle are checked,
**characterized in**
that origins of said errors are defined referring to the recorded telescopic movements (ΔR) to prepared trace patterns of typical origins of errors, that said telescopic movements (ΔR) are sampled periodically at intervals of a certain period of time, that a built-in transducer detects said sampled telescopic movements (ΔR) and sends signals to a device (19, 23) to memorize said signals and to plot them on the polar coordinates in the form of a curve, and that means detect how the curve deviates from the datum circle to extract distinctive characteristics from the curve comparing them with data of typical origins for motion errors contained in a data bank (24) and to define and display the origins for the motion errors.

2. The means as set forth in claim 1 characterized in that said rotary joints (4,5) comprise each a steel ball (6, 7) fixed at the bar (3), a spherical socket (8, 9) and a magnet (10, 11) in said socket (8, 9) to attract the steel ball (6, 7).

3. The means as set forth in claim 1 characterized in that the rotary joints (26) comprise each a rotary bearing.

## Patentansprüche

1. Vorrichtung zur Messung von Bewegungsfehlern von NC-Werkzeugmaschinen unter Verwendung einer Teleskopstange (3), die an ihren beiden Enden mit Drehgelemken (4, 5; 26) gekoppelt ist und eine eingebaute Skala (13) zur Messung ihrer Teleskopbewegungen (ΔR) aufweist, wobei ein Drehgelenk (4; 26) auf einer Spindel (2) der NC-Werkzeugmaschine montiert ist, das andere Drehgelenk (5; 26) auf einem Tisch (1) montiert ist, die NC-Werkzeugmaschine numerisch so gesteuert wird, daß das eine Drehgelenk (4; 26 bzw. 5; 26) relativ zum Zentrum des anderen Drehgelenkel (5; 26 bzw. 4; 26) eine kreisförmige Interpolationsbewegung ausführt, und wobei die Teleskopbewegungen (ΔR) der Teleskopstange (3) zur Berechnung und Analyse von Bewegungsfehlern gespeichert und aufgezeichnet werden und die Form und der Betrag der Abweichung in Bezug auf einen gegebenen Kreis geprüft werden,
**dadurch gekennzeichnet**, daß
Fehlerquellen unter Bezugnahme auf die aufgezeichneten Teleskopbewegungen (ΔR) zu vorgegebenen Spurformen typischer Fehlerquellen definiert werden, daß die Teleskopbewegungen (ΔR) periodisch in Intervallen einer bestimmten Zeitperiode abgetastet werden, daß ein eingebauter Wandler die abgetasteten Teleskopbewegungen (ΔR) detektiert und Signale zu einer Anordnung (19, 23) zwecks Speicherung dieser Signale und deren Ausdrucken in Polarkoordinaten in Form einer Kurve sendet und daß eine Anordnung detektiert, wie die Kurve vom gegebenen Kreis abweicht, um charakteristische Eigenschaften aus der Kurve zu entnehmen, die mit in einer Datenbank (24) enthaltenen Daten typischer Bewegungsfehlerquellen zu vergleichen und eine Anzeige der Bewegungsfehlerquellen zu definieren.

2. Vorrichtung nach Anspruch 1, **dadurch gekennzeichnet**, daß die Drehgelenke (4, 5) jeweils eine an der Stange (3) befestigte Stahlkugel (6, 7) sowie einen die Stahlkugel (6, 7) anziehenden Magneten (10, 11) in der Kugelpfanne (8, 9) umfassen.

3. Vorrichtung nach Anspruch 1, **dadurch gekennzeichnet**, daß die Drehgelenke (26) jeweils ein Drehlager umfassen.

## Revendications

1. Moyen pour mesurer les erreurs de déplacement de machines-outils à commande numérique utilisant une barre (3) axialement télescopique qui est couplée à des joints (4, 5 ; 26) rotatifs en ses deux extrémités et qui comporte une échelle incorporée (13) pour mesurer ses déplacements télescopiques (ΔR), dans lequel un joint rotatif (4 ; 26) est monté sur une broche (2) de la machine-outil CN et l'autre joint rotatif (5 ; 26) est monté sur une table (1), dans lequel la machine-outil CN est commandée numériquement pour que le premier joint rotatif (respectivement 4 ; 26 et 5 ; 26) adopte un mouvement d'interpolation circulaire par rapport au centre de l'autre joint rotatif (respectivement 5 ; 26 et 4 ; 26), et dans lequel les déplacements télescopiques (ΔR) de la barre (3) télescopique sont mémorisés et enregistrés pour évaluer et analyser les erreurs de déplacement, et le type ainsi que la quantité de déviation sont vérifiés en se référant à un cercle donné,
caractérisé en ce que
les origines desdites erreurs sont définies en rapportant les déplacements télescopiques enregistrés (ΔR) à des configurations prédéterminées de dessins dues à des erreurs classiques, en ce que lesdits déplacements télescopiques (ΔR) sont périodiquement échantillonnés à des intervalles d'une certaine durée, en ce que un capteur intégré détecte lesdits déplacements télescopiques (ΔR) échantillonnés et envoie des signaux à un dispositif (19, 23) pour mémoriser lesdits signaux et les tracer en coordonnées polaires sous forme d'une courbe, et en ce que un moyen détecte comment la courbe dévie du cercle donné pour extraire de la courbe des caractéristiques distinctives en les comparant avec les données d'origine classique pour les erreurs de déplacement contenues dans une banque de données (24) et pour définir et afficher les origines des erreurs de déplacement.

2. Moyen selon la revendication 1, caractérisé en ce que lesdits joints rotatifs comportent chacun une bille d'acier (6, 7) fixée à la barre (3), un manchon sphérique (8, 9) et un aimant (10, 11) dans ledit manchon (8, 9) pour attirer la bille d'acier (6, 7).

3. Moyen selon la revendication 1, caractérisé en ce que les joints rotatifs (26) comportent chacun un palier rotatif.
